# EUROPÄISCHE PATENTSCHRIFT

(11) **EP 2 529 918 B1**
(45) Veröffentlichungstag und Bekanntmachung des Hinweises auf die Patenterteilung: **26.01.2022**
(21) Anmeldenummer: 12169527.4
(22) Anmeldetag: 25.05.2012
(51) Int. Cl.: B29C 70/38, B29C 70/32, B29C 70/20, B29K 21/00, B29B 15/12, B29B 15/14, B29C 53/80, B29K 23/00

(54) **Verfahren und Anordnung zum Aufbringen einer Endlosfaser auf ein Objekt**
Method and assembly for applying an endless fibre to an object
Procédé et agencement destinés à appliquer une fibre continue sur un objet

(30) Priorität: 31.05.2011 DE 102011050780
(43) Veröffentlichungstag der Anmeldung: 05.12.2012
(73) Patentinhaber: KUKA Industries GmbH, 86199 Augsburg (DE)
(72) Erfinder: Zimmermann, Dirk, 52156 Monschau (DE); Bischof, Thomas, 52066 Aachen (DE)
(74) Vertreter: Böss, Dieter Alexander

(56) Entgegenhaltungen:
- EP-A1- 2 324 994
- FR-A1- 2 784 930
- US-A- 5 936 861

## Beschreibung

Die Erfindung bezieht sich auf ein Verfahren zum Aufbringen einer mit einer aus einem thermoplastischen Material bestehenden oder ein thermoplastisches Material enthaltenden Imprägnierung versehenen Endlosfaser auf ein sich bewegendes Objekt, insbesondere auf ein strukturbelastetes Bauteil.

Auch nimmt die Erfindung Bezug auf eine Anordnung zum Aufbringen einer mit zumindest thermoplastisches Material enthaltender Imprägnierung versehenen Endlosfaser auf ein sich bewegendes Objekt umfassend eine Imprägniereinrichtung, eine erste Transporteinrichtung für die Endlosfaser sowie eine zweite Transporteinrichtung für das Objekt.

Um strukturbelastete Bauteile aus Kunststoff insbesondere im Kraftfahrzeugbereich zu verstärken, ist es bekannt, mit einem Thermoplast imprägnierte Endlosfasern, also Endlosfaserbündel oder -stränge, auf die Bauteile aufzubringen. Hierzu wird zunächst eine Endlosfaser imprägniert, in gewünschte Längen zerteilt und entsprechende ausgehärtete Langfaserabschnitte auf die Bauteile gelegt, um sodann durch Erwärmen ein Aufschmelzen des thermoplastischen Materials und somit Verbinden mit dem Bauteil zu ermöglichen. Diesbezügliche Maßnahmen sind aufwendig und nachteilig für einen automatisierten Produktionsablauf.

Die WO 2009/156157 A1 bezieht sich auf eine Vorrichtung und ein Verfahren zum Aufbringen eines bandförmigen Materials auf die Oberfläche eines Werkstücks. Das Werkstück oder das bandförmige Material wird über Antriebe verstellt.

Aus der EP 2 324 994 A1 ist ein Verfahren zum Auftragen von imprägnierten Fasern auf ein sich drehendes Werkzeug bekannt. Die Relativbewegung zwischen den Fasern und dem Werkzeug kann gesteuert werden.

Bei einem Fertigungsverfahren für Formkörper aus Faserverbundwerkstoffen nach der DE 10 2007 009 124 A1 wird ein bandförmiges, Verstärkungsfasern und ein duroplastisches Herz aufweisenden Ausgangsmaterial kontinuierlich vorgeschoben oder vorgezogen. Das Ausgangsmaterial wird durch Einkoppeln eines magnetischen Wechselfeldes in das Harz im Durchlauf erwärmt.

Die US 5,936,861 beschreibt ein Verfahren zur Herstellung von dreidimensionalen Kompositmaterialobjekten. Dazu wird ein imprägnierter Endlosfaserstrang mäanderförmig auf einen Tisch aufgetragen und dadurch zu dem Kompositmaterialobjekt geformt.

Die EP 2 324 994 A1 beschreibt eine Vorrichtung bei der ein imprägnierter Faserstrang auf ein Werkzeug aufgewickelt wird.

Die FR 2 784 930 A1 beschreibt ein Rohr, das zu seiner Verstärkung mit einem imprägnierten Faserstrang umwickelt wird, der aus Glasfasern und aus Kunststofffasern eines thermoplastischen Kunststoffs besteht.

Der vorliegenden Erfindung liegt die Aufgabe zugrunde, ein Verfahren und eine Anordnung der eingangs genannten Art so weiterzubilden, dass automatisiert reproduzierbar Endlosfasern bzw. Abschnitte dieser auf ein sich bewegendes Objekt in gewünschter Lage auftragbar ist, um eine gewünschte Verstärkung zu erzielen.

Verfahrensmäßig wird die Aufgabe dadurch gelöst, dass zum Aufbringen einer mit einer aus einem thermoplastischen Material bestehenden oder ein thermoplastisches Material enthaltenden Imprägnierung versehenen Endlosfaser auf ein sich bewegendes Objekt, insbesondere auf ein strukturbelastetes Bauteil, die Endlosfaser nach deren Imprägnierung einer Richteinrichtung zugeführt wird, mit der die imprägnierte Endlosfaser unidirektional auf das Objekt ausgerichtet wird, wobei die imprägnierte Endlosfaser durch einen ersten Kanal der Richteinrichtung geführt wird, in dessen Austrittsbereich auf die Endlosfaser eine in Längsrichtung des ersten Kanals wirkende Kraft einwirkt, und wobei das Objekt mit einer Handhabungseinrichtung bewegt wird und sowohl Geschwindigkeits- als auch Beschleunigungsverlauf des sich bewegenden Objekts auf die aufzubringende Endlosfaser übertragen wird und der Geschwindigkeits- und Beschleunigungsverlauf der Endlosfaser mittels einer Messeinrichtung ermittelt und in Abhängigkeit von ermittelten Messwerten die Geschwindigkeit und die Beschleunigung der Transporteinrichtung derart geregelt wird, dass der Transport der Endlosfaser dem Geschwindigkeits- und Beschleunigungsverhalten des Objekts in Echtzeit entspricht und im Austrittsbereich des ersten Kanals ein Fördermaterial auf die Endlosfaser einwirkt, über das die Endlosfaser ausgerichtet wird, wobei die imprägnierte Endlosfaser einer Düse als die Richteinrichtung mit dem ersten Kanal zugeführt wird, der von einem zweiten Kanal umgeben ist, über den das Fördermaterial zugeführt wird.

Durch die erfindungsgemäßen Maßnahmen ist sichergestellt, dass die Endlosfaser, also ein Bündel von Filamenten, deren Imprägnierung nicht ausgehärtet ist, im gespannten Zustand auf das Objekt aufgebracht werden kann, auch zu Beginn des Auftragens. Dies stellt die Richteinrichtung sicher, wobei insbesondere vorgesehen ist, dass die imprägnierte Endlosfaser durch einen Kanal der Richteinrichtung geführt wird, in dessen Austrittsbereich auf die Endlosfaser eine in Längsrichtung des Kanals wirkende Kraft einwirkt.

Durch die Richteinrichtung ist sichergestellt, dass die Endlosfaser auch in dem Bereich zwischen der Imprägnierung und dem Objekt, in dem die Endlosfaser führungslos sein könnte, derart geführt wird, dass die erforderliche Spannung gegeben ist. Dabei besteht die Möglichkeit, dass die Endlosfaser in der Richteinrichtung im gewünschten Umfang gedehnt oder gegebenenfalls gestaucht wird. Insoweit ist das Merkmal "Spannen" zu relativieren.

Gemäß der Erfindung ist vorgesehen, dass im Austrittsbereich des Kanals auf die Endlosfaser ein Fördermaterial einwirkt, über das die Endlosfaser ausgerichtet wird. Dabei sollte als Fördermaterial ein thermoplastisches Material, insbesondere Polypropylen verwendet werden. Als Matrixmaterial für die Endlosfaser, also für das Imprägniermaterial, sollte vorzugsweise als thermoplastisches Material ein Polyamid Verwendung finden.

Vorzugsweise ist vorgesehen, dass als die Endlosfaser eine 2-Komponenten-Faser verwendet wird, deren eine erste Komponente Filamente aus der Gruppe Naturfaser, Synthetikfaser, Carbonfaser, Glasfaser, Aramidfaser und deren andere zweite Komponente aus thermoplastischem Material bestehende Filamente sind, die zum Imprägnieren der ersten Komponenten z. B. durch IR-Bestrahlung aufgeschmolzen werden.

Erfindungsgemäß ist vorgesehen, dass das Objekt mit einer Handhabungseinrichtung bewegt wird und dass sowohl Geschwindigkeits- als auch Beschleunigungsverlauf des sich bewegenden Objekts synchron über eine Achse des Handhabungsgeräts auf die erste Transporteinrichtung übertragen wird, mit der die Endlosfaser oder ein Abschnitt einer solchen der Richteinrichtung zugeführt werden. Sollte während der Förderung ein Schlupf zwischen der Endlosfaser, d. h. dem Faserbündel - auch Roving genannt - und der ersten Transporteinrichtung festgestellt werden, so erfolgt ein nachregeln.

Aufgrund der erfindungsgemäßen Lehre besteht die Möglichkeit, auf ein sich bewegendes Objekt eine imprägnierte Endlosfaser gespannt aufzubringen. Gespannt bedeutet dabei nicht, dass die Endlosfaser gedehnt sein muss. Gespannt bedeutet, dass die Endlosfaser derart entlang ihrer Längsrichtung ausgerichtet ist, dass ein unidirektionales Ablegen auf das Objekt möglich ist. Dies wird erfindungsgemäß dadurch sichergestellt, dass die flexible Endlosfaser mit dem gleichen Geschwindigkeits- und Beschleunigungsverlauf auf das Objekt abgelegt wird, den das Objekt aufweist. Somit kann keine Relativbewegung zwischen dem Objekt und der Endlosfaser auftreten.

Unabhängig hiervon sieht die Erfindung vor, dass als Fördermaterial zumindest ein Material aus der Gruppe PP (Polypropylen), PA (Polyamid), PET (Polyethylenterephthalat), TPE (thermoplastisches Elastomere), Polyolefine, Polystyrol, PBT (Polybutylenterephthalat) in Frage kommt. Gleiche Materialien kommen auch als das Imprägniermaterial in Frage.

Um mit konstruktiv einfachen Maßnahmen die imprägnierte Endlosfaser gerichtet dem Objekt zuzuführen, ist vorgesehen, dass die imprägnierte Endlosfaser einer Düse mit einem ersten Kanal zugeführt wird, der von einem zweiten Kanal vorzugsweise konzentrisch umgeben ist, über den das Fördermaterial zugeführt wird.

Wird vorzugsweise ausschließlich ein thermoplastisches Material als Fördermittel zum "Spannen" der imprägnierten Endlosfaser benutzt, so kann zur Erzielung der gleichen Wirkung vorgesehen sein, dass als Fördermaterial compoundiertes Material verwendet wird, das zumindest Langfasern und thermoplastisches Material enthält.

Damit der Endlosfaser das Geschwindigkeits- bzw. Beschleunigungsprofil des bewegenden Objekts, auf das die imprägnierte Endlosfaser aufzutragen ist, aufgeprägt werden kann, ist insbesondere die erste Transporteinrichtung vorgesehen, die der Imprägniereinrichtung nachgeordnet ist. Es besteht aber auch die Möglichkeit, dass Imprägniereinrichtung und Transporteinrichtung eine Einheit bilden.

So sieht eine Ausführungsform der Erfindung vor, dass die Endlosfaser in einer Imprägniereinrichtung auf einem Rotor schlupffrei geführt wird, der in Bezug auf die auf das Objekt aufzubringende imprägnierte Endlosfaser einen wirksamen Umfangsgeschwindigkeits- und Beschleunigungsverlauf aufweist, der gleich dem des Objekts ist. Dies ist dann der Fall, wenn eine schlupffreie Förderung erfolgt.

Es kann der Fall auftreten, dass ein schlupffreies Fördern nicht gegeben ist. Daher ist insbesondere vorgesehen, dass der tatsächliche Faservorschub über eine Messeinrichtung permanent ermittelt und die Geschwindigkeit der ersten Transporteinrichtung wie des Rotors so geregelt wird, dass der Faservorschub dem Geschwindigkeits- und Beschleunigungsverhalten des Objekts in Echtzeit entspricht.

Eine Anordnung der eingangs genannten Art zeichnet sich dadurch aus, dass zwischen der ersten Transporteinrichtung und dem Objekt eine Richteinrichtung angeordnet ist, mit der die imprägnierte Endlosfaser unidirektional dem Objekt zuführbar ist und dass die Richteinrichtung eine Düse mit zumindest einem ersten und einem zweiten Kanal ist, wobei dem ersten Kanal die imprägnierte Endlosfaser zuführbar ist und die imprägnierte Endlosfaser beim Austreten aus dem ersten Kanal unidirektional mittels eines durch den den ersten Kanal umgebenden zweiten Kanal strömenden Fördermaterials ausrichtbar ist, und wobei die zweite Transporteinrichtung für das Objekt eine Handhabungseinrichtung ist, deren Steuereinrichtung Geschwindigkeits- und Beschleunigungsverhalten des Objekts auf den Antrieb der ersten Transporteinrichtung in Echtzeit abbildet, aufweisend eine Messeinrichtung die ausgebildet ist, den Geschwindigkeits- und Beschleunigungsverlauf der Endlosfaser zu ermitteln, so dass in Abhängigkeit von ermittelten Messwerten die Geschwindigkeit und die Beschleunigung der Transporteinrichtung mittels der Steuereinrichtung derart geregelt wird, dass der Transport der Endlosfaser dem Geschwindigkeits- und Beschleunigungsverhalten des Objekts in Echtzeit entspricht.

Das Geschwindigkeits- und Beschleunigungsverhalten des Objekts kann beim schlupffreien Transport der Endlosfaser auch auf eine Antriebsachse der Fördereinrichtung in Echtzeit abgebildet werden.

Da jedoch eine schlupffreie Förderung nicht sichergestellt ist, ist insbesondere vorgesehen, dass der tatsächliche Faservorschub vor oder in der ersten Transporteinrichtung mittels einer Messeinrichtung permanent ermittelt wird, um in Abhängigkeit von der Abweichung zwischen den gemessenen Geschwindigkeits- und Beschleunigungswerten zwischen dem Objekt und der Endlosfaser den Antrieb der ersten Transporteinrichtung derart zu regeln, dass der Faservorschub dem Geschwindigkeits- und Beschleunigungsverhalten des Objekts in Echtzeit entspricht. Bei der Messeinrichtung kann es sich z. B. um zwei Rollen oder Walzen handeln, zwischen denen die Endlosfaser geführt wird. Es steht somit ein Geber zur Verfügung, über den der Antrieb der ersten Transporteinrichtung geregelt wird.

Es besteht die Möglichkeit, dass die erste Transporteinrichtung ein Rotor ist, in oder auf dessen Umfangswandung die imprägnierte Endlosfaser führbar ist.

Insbesondere ist jedoch vorgesehen, dass die erste Transporteinrichtung mehrere die Endlosfaser führende Rollen aufweist, von denen zumindest eine über die Steuerung der Handhabungseinrichtung Steuer- bzw. regelbar ist.

Bei den Endlosfasern handelt es sich insbesondere um eine Faser aus der Gruppe Naturfaser, Synthetikfaser, Carbonfaser, Glasfaser, Aramidfaser, ohne dass hierdurch die erfindungsgemäße Lehre eingeschränkt werden soll. Insbesondere sind die Fasern 2-Komponenten-Fasern, wobei Filamente einer Faser zum Imprägnieren der Filamente der anderen Faser aus einem thermoplastischen Material bestehen, das aufgeschmolzen wird.

Faser bedeutet ein aus Filamenten bestehendes Faserbündel bzw. Faserstränge bzw. Roving.

Aufgrund der erfindungsgemäßen Lehre kann die imprägnierte Endlosfaser reproduzierbar auf das Objekt aufgetragen werden, wobei insbesondere ein Fördermaterial benutzt wird, das zusammen mit der imprägnierten Endlosfaser durch eine Düse hindurchgeführt wird, die prinzipiell dem Aufbau eine Koextrusionsdüse im Austrittsbereich entsprechen kann. Dabei wird das Fördermaterial derart auf die in der Düse geführte imprägnierte Endlosfaser ausgerichtet, dass diese gespannt und somit gerichtet auf das transportierte Objekt aufgelegt werden kann. Mit anderen Worten erfasst das Fördermaterial die Endlosfaser, so dass gezielt ein unidirektionales Ablegen auf das Objekt, das auch als Träger bezeichnet werden kann, möglich ist.

Dabei wird die Endlosfaser insbesondere in Lastrichtung des Trägers abgelegt, um auf den Träger einwirkende Kräfte aufnehmen zu können. Als Objekt oder Träger kommen insbesondere strukturbelastete Bauteile aus Kunststoff wie Rückenlehne oder Rückbank oder sonstige tragende Bauteile insbesondere im Kraftfahrzeugbau in Frage, ohne dass hierdurch eine Einschränkung der Anwendungsbeispiele erfolgen soll.

Da die imprägnierte Endlosfaser noch bei weichem, also nicht ausgehärtetem Imprägniermittel auf das Objekt aufgelegt wird, erfolgt eine Produktionssicherheit und Beschleunigung, die der Stand der Technik nicht kennt; denn nach bekannten Verfahren werden Abschnitte von Endlosfasern, die von ausgehärtetem Imprägniermaterial umgeben sind, auf einen Träger aufgelegt, um sodann durch Erwärmen ein Schmelzen des Imprägniermaterials zu erreichen, wodurch die Verbindung mit dem Träger ermöglicht wird.

Erfindungsgemäß erfolgt ein Erstarren des Imprägniermittels jedoch nicht vor dem Auftragen auf dem Träger, sondern erst dann, wenn die imprägnierte Endlosfaser auf diesem aufgebracht ist. Die imprägnierte Endlosfaser ist des Weiteren von dem Fördermaterial ganz oder teilweise umgeben.

In Abhängigkeit von der Fördergeschwindigkeit des Fördermaterials in der Richteinrichtung kann die imprägnierte Endlosfaser im erforderlichen Umfang gedehnt bzw. gestaucht werden.

Somit dient das Fördermaterial als Aus- und Auftragshilfe für die Endlosfaser.

Da auf das Objekt nicht zuvor abgelängte Abschnitte einer Endlosfaser, sondern diese selbst aufgebracht wird, besteht die Möglichkeit, die Endlosfaser in 3D-Konfiguration abzulegen.

Bezüglich der Übertragung des Geschwindigkeits- bzw. -beschleunigungsprofils des Objekts auf die erste Transporteinrichtung der Endlosfaser ist anzumerken, dass dann, wenn die imprägnierte Endlosfaser mittels eines Rotors, der auch als Förderwalze bezeichnet werden kann, gefördert wird, der Durchmesser des Rotors unter Einbeziehung der Dicke der Endlosfaser einschließlich Imprägnierung berücksichtigt wird, wobei von dem neutralen Bereich ausgegangen wird, also der Mitte der auf dem Rotor aufliegenden imprägnierten Endlosfaser.

Durch die erfindungsgemäße Lehre stimmt die Fördergeschwindigkeit des Objekts mit der der imprägnierten Endlosfaser überein.

Wird vorzugsweise eine ein Material führende Düse zum gespannten Auflegen der imprägnierten Endlosfaser auf das Objekt benutzt, so können auch andere Einrichtungen wie mechanische Hilfsmittel Verwendung finden, die gleichfalls sicherstellen, dass die Endlosfaser "gespannt" auf das Objekt aufgebracht wird. Beispielhaft sind eine oder mehrere Führungs- bzw. Umlenkrollen zu nennen. Auch eine angetriebene Andruckrolle oder ein angetriebener Riementrieb kommen als Richteinrichtung in Frage.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung einer Anordnung zum Auftragen einer Endlosfaser auf ein Objekt,
- Fig. 2: eine Prinzipdarstellung einer weiteren Ausführungsform einer Anordnung zum Auftragen einer Endlosfaser auf ein Objekt,
- Fig. 3: eine Prinzipdarstellung einer weiteren Ausführungsform einer Anordnung zum Auftragen einer Endlosfaser auf ein Objekt,
- Fig. 4: eine Richteinrichtung,
- Fig. 5: eine Prinzipdarstellung einer bevorzugten Ausführungsform einer Anordnung zum Auftragen einer Endlosfaser auf ein Objekt und

- Fig. 6: Blockschaltbilder verschiedener Möglichkeiten, um Endlosfasern gemäß Fig. 1 und 2 auf ein Objekt aufzutragen.

Anhand der Figuren soll rein prinzipiell die erfindungsgemäße Lehre zum Auftragen von einer oder mehreren Endlosfasern auf ein bewegtes Objekt wie ein strukturbelastetes Bauteil beschrieben werden. Dabei werden grundsätzlich für gleiche Elemente gleiche Bezugszeichen verwendet.

Bei den Objekten handelt es sich insbesondere um aus Kunststoff bestehende oder eine Kunststoffaußenschicht aufweisende Bauteile, wie diese z. B. im Automobilbereich zum Einsatz gelangen. Hierzu gehören u.a. beispielsweise Rückenlehnen oder Rücksitzbänke. Um diese in Lastrichtung zu verstärken, werden auf deren Oberflächen imprägnierte Endlosfasern aufgebracht. Als weitere Anwendungsbeispiele sind weiße Waren oder Möbel zu nennen.

Unter Endlosfasern versteht man Fasern bzw. Faserstränge oder Bündel, also Rovings, insbesondere in Form von Naturfasern, Synthetikfasern, Carbonfasern, Glasfasern, Aramidfasern oder andere geeignete Fasern. Insoweit ist der Begriff "Endlosfaser" und "Endlosfaserstrang" bzw. "Endlosfaserbündel" oder "Roving" als Synonym zu verstehen. Diese bestehen aus Filamente. Insbesondere werden 2-Komponenten-Endlosfasern benutzt, wobei Filamente einer Faser zum Imprägnieren der Filamente der anderen Faser aus einem thermoplastischen Material bestehen, das aufgeschmolzen wird.

Zum Auftragen der Endlosfaser wird diese zuvor imprägniert und sodann auf ein bewegtes Objekt abgelegt und ausgehärtet. Das Aushärten bzw. Abkühlen kann auch über einen werkstückformgebenden Pressprozess in entsprechenden Pressvorrichtungen erfolgen.

Das Objekt wird mittels einer Handhabungseinrichtung transportiert und weist ein durch die Handhabungseinrichtung vorgegebenes Geschwindigkeits- bzw. Beschleunigungsverhalten auf. Erfindungsgemäß wird dieses auf die abzulegende Endlosfaser übertragen, so dass infolgedessen aufgrund der erfindungsgemäßen Lehre sowohl der Geschwindigkeits- als auch der Beschleunigungsverlauf des Objekts synchron über eine Achse des Handhabungsgeräts auf den Transport der Endlosfaser übertragen werden. Es wird folglich durch die Steuerung der Handhabungseinrichtung der Geschwindigkeits- und Beschleunigungsverlauf des Objekts auf eine Antriebsachse einer ersten Transporteinrichtung in Echtzeit abgebildet, mittels der die Endlosfaser gefördert wird, sofern ein schlupffreier Transport sichergestellt ist.

Arbeitet die erste Transporteinrichtung nicht schlupffrei, wird der tatsächliche Faservorschub über eine Messeinrichtung permanent ermittelt und die Geschwindigkeit bzw. Beschleunigung der Transporteinrichtung so geregelt, dass der Faservorschub dem Geschwindigkeits- und Beschleunigungsverhalten des Objekts in Echtzeit entspricht. Entsprechend der erfindungsgemäßen Lösung weist die geförderte Endlosfaser ungeachtet eines nicht schlupffreien Transports das gleiche Geschwindigkeits- und Beschleunigungsverhalten wie das Objekt auf.

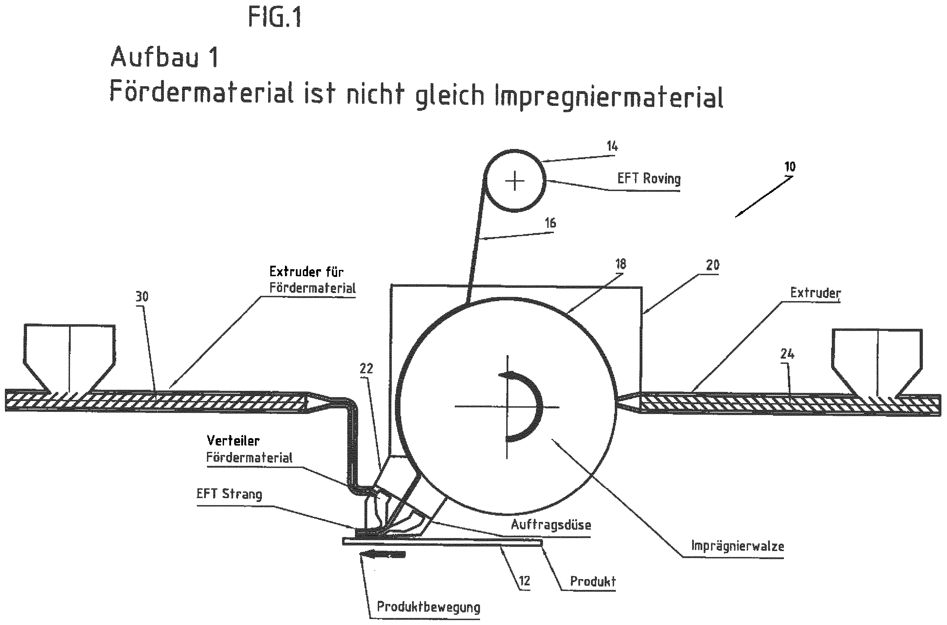

Der Fig. 1 ist prinzipiell eine Anordnung 10 zu entnehmen, mittels der auf ein als Produkt gekennzeichnetes Objekt 12 ein von einem Wickel 14 abgezogener Roving 16 - nachstehend vereinfacht Endlosfaser genannt - abgezogen und über einen Rotor 18, der auch als Imprägnierwalze bezeichnet werden kann, in einer Imprägniereinrichtung 20 geführt und imprägniert wird, um sodann mittels einer der Imprägniereinrichtung 20 nachgeordneten Richteinrichtung 22 die imprägnierte Endlosfaser 16 auf das Objekt 12 in einem Umfang gespannt auflegen zu können, dass die Endlosfaser 16 unidirektional in Transportrichtung des Produkts 12 auf dieses abgelegt und sodann die Imprägnierung ausgehärtet wird.

Zum Imprägnieren der Endlosfaser 16 wird der Imprägniereinrichtung 20 über einen Extruder 24 Imprägniermaterial zugeführt, damit sodann die Endlosfaser 16 während der Förderung mittels der Imprägnierwalze 18 imprägniert werden kann. Dabei liegt die Endlosfaser 16 schlupffrei auf der Oberfläche der Imprägnierwalze 18 auf, und wird mit dieser bewegt, wobei diese einen Geschwindigkeits- bzw. Beschleunigungsverlauf aufweist, der dem des Produkts 12 entspricht.

Das Produkt 12 wird mittels einer Handhabungseinrichtung transportiert, deren Steuerung den Geschwindigkeits- und Beschleunigungsverlauf des Produkts 12 auf die Imprägnierwalze 18 und somit auf die imprägnierte Endlosfaser 16 überträgt.

Bei der Imprägniereinrichtung 20 kann es sich prinzipiell um eine Anordnung handeln, wie diese der WO-A-2008/071782 zu entnehmen ist, soweit das Bauteil "infiltrating device 3" betroffen ist.

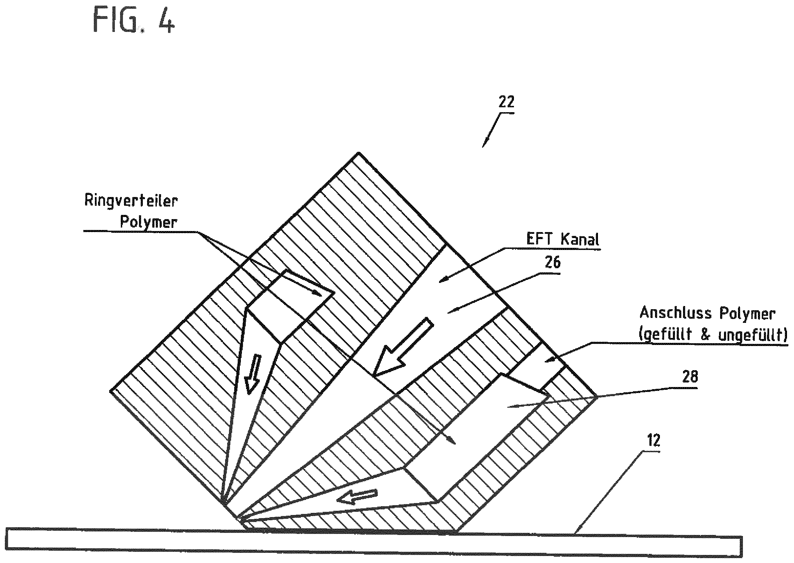

Damit die imprägnierte Endlosfaser 16 gerichtet, also "gespannt" auf das Produkt 12 aufgelegt wird, wird die imprägnierte Endlosfaser 16 nach Verlassen der Imprägniereinrichtung 20 durch die Richteinrichtung 22 geführt, die im Ausführungsbeispiel einen prinzipiellen Aufbau wie eine Extrusionsdüse besitzt, wie dies auch prinzipiell der Fig. 4 zu entnehmen ist. Die Richteinrichtung 22 weist einen ersten Kanal 26 auf, der koaxial von einem zweiten Kanal 28 umgeben ist.

Durch den ersten Kanal 26 wird die imprägnierte Endlosfaser 16 geführt. Über den den ersten Kanal 26 koaxial umgebenden zweiten Kanal 28 fließt ein Fördermaterial, das über einen zweiten Extruder 30 dem zweiten Kanal 28 zugeführt wird. Das Fördermaterial stellt sicher, dass die dem Grunde nach verformbare imprägnierte Endlosfaser 16 in Längsrichtung des ersten Kanals 26 beim Austritt aus diesem eine Kraft erfährt, durch die ein Ausrichten und somit "Spannen" erfolgt, dass die imprägnierte Endlosfaser 16 zusammen mit dem Fördermaterial unidirektional auf das Produkt 12 aufgetragen werden kann.

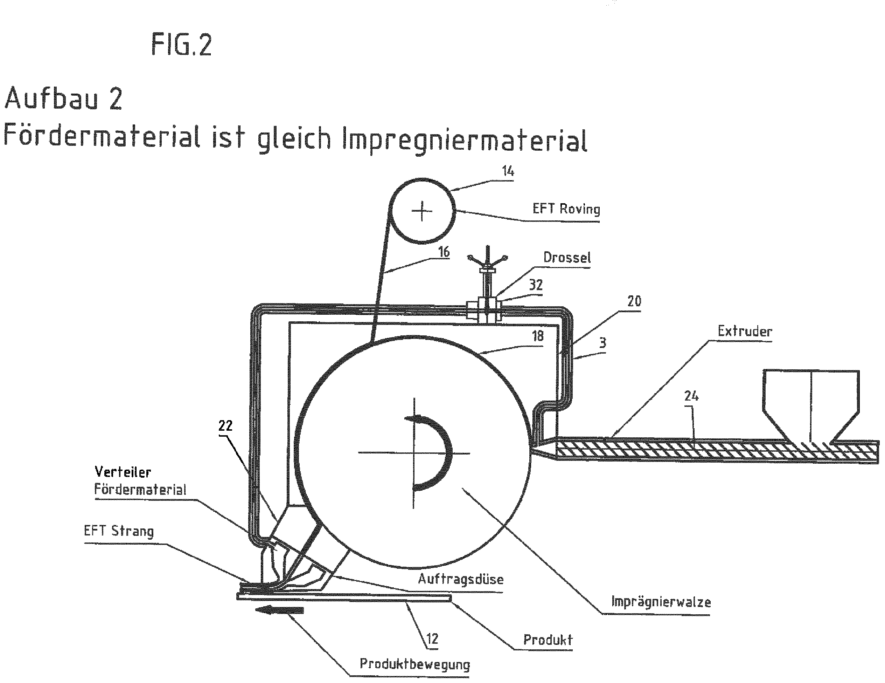

Bei dem Fördermaterial kann es sich um ein Material handeln, das von dem Imprägniermaterial abweicht. Es besteht entsprechend der Fig. 2 jedoch auch die Möglichkeit, dass das Fördermaterial dem Imprägniermaterial entspricht. Hierzu wird ein Teil des dem Extruder 24 entnommenen thermoplastischen Materials über eine Leitung 31, die vom Ende des Extruders 24 abzweigt, dem zweiten Kanal 28 zugeführt. In der Leitung 31 kann sich eine Drossel 32 befinden.

Sofern als Fördermaterial nicht das Imprägniermaterial benutzt wird, sollte ersteres Polypropylen sein. Es besteht jedoch auch die Möglichkeit, compoundierte Langfasern mit Thermoplastmaterial zu verwenden.

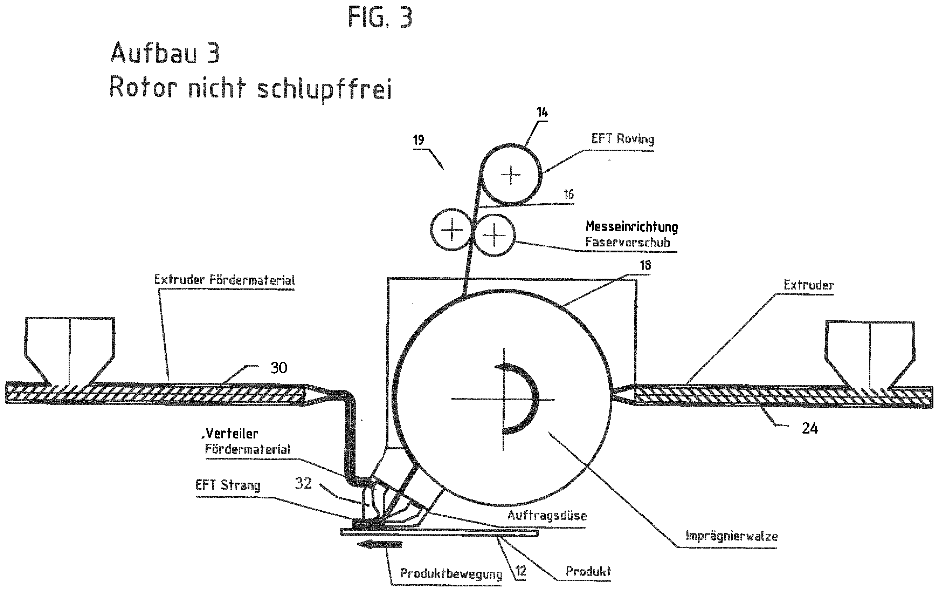

Die Fig. 3 entspricht grundsätzlich der Darstellung der Fig. 1 mit der Einschränkung, dass der Imprägnierwalze 18 eine Messeinrichtung 19 vorgeordnet ist, mittels der der Vorschub der Endlosfaser 16 ermittelt wird und somit als Geber für den Antrieb der Walze 18 dient, so dass durch eine entsprechende Regelung der Walze 18 der Vorschub der Faser 19 dem Geschwindigkeits- und Beschleunigungsverhalten des Objekts oder Produkts 12 entspricht, mit dem folglich die Endlosfaser 16 aufgetragen wird.

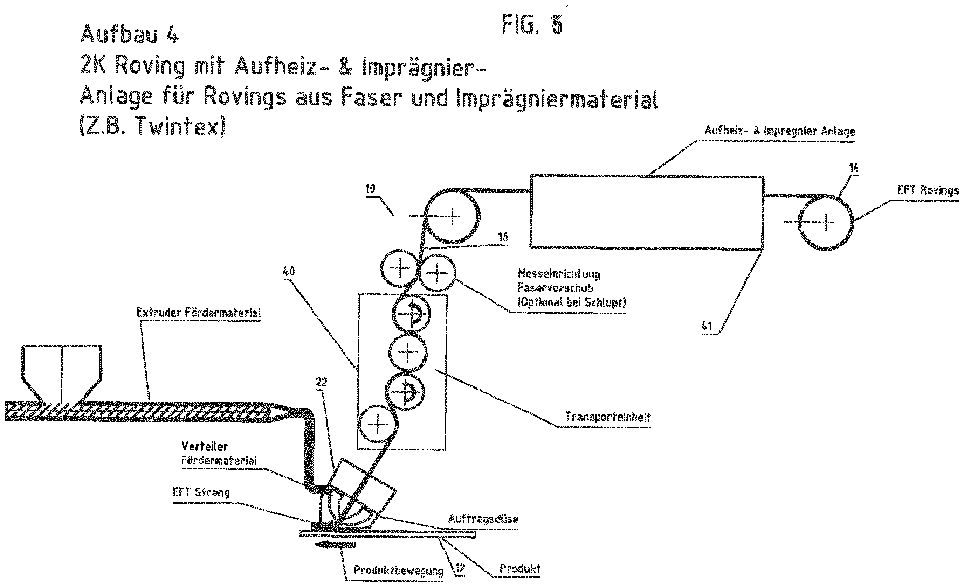

Eine Prinzipdarstellung einer bevorzugt zum Einsatz gelangenden Anordnung zum Aufbringen einer Endlosfaser 16 auf ein Objekt 12 ist der Fig. 5 zu entnehmen. Dabei werden entsprechend der Fig. 1 bis 4 für gleiche Elemente gleiche Bezugszeichen verwendet. Abweichend vom Ausführungsbeispiel der Fig. 1 bis 3 wird eine gesonderte erste Transporteinrichtung 40 benutzt, um die Endlosfaser 16 nach deren Imprägnierung zu fördern.

Um das Imprägnieren durchzuführen, ist insbesondere vorgesehen, dass 2-Komponenten-Rovings benutzt werden, d. h., Rovings, bei denen erste Filamente z. B. Glasfilamente und zweite Filamente z. B. aus Thermoplast wie Polypropylen bestehen. Die 2-Komponenten-Rovings werden sodann durch eine Aufheiz- oder Imprägnieranlage 41 geführt, die z. B. einen Infrarot-Ofen umfasst, in dem der Thermoplast aufgeschmolzen wird und somit die Glasfilamente umgeben kann.

Nach Verlassen der Imprägnieranordnung 41 wird die Endlosfaser 16 der Transporteinrichtung 40 zugeführt, die mehrere Rollen umfasst, um die und zwischen denen die Endlosfaser geführt wird. Zumindest eine der Rollen wird angetrieben, wobei der Antrieb derart gesteuert wird, dass das Geschwindigkeits- und Beschleunigungsverhalten des unter der Richteinrichtung 22 mittels einer Handhabungseinrichtung wie Roboter bewegten Produkts 12 in Echtzeit abbildbar ist. Der Antrieb der Transporteinrichtung 41 entspricht somit einer Achse des Roboters. Wie der Prinzipdarstellung zu entnehmen ist, ist der Transporteinrichtung 40 eine Messeinrichtung 19 vorgeordnet, um einen Schlupf zu erfassen, der entsprechend der erfindungsgemäßen Lehre durch Regeln des Antriebs der Transporteinrichtung 40 ausgeglichen wird.

Wird das Fördermaterial für das Spannen der Endlosfaser 16 in der Richteinrichtung 42 und dem damit ermöglichenden unidirektionalen Ablegen der Endlosfaser 16 auf dem Objekt 12 in einem gesonderten Extruder entnommen, so besteht entsprechend der Fig. 2 auch die Möglichkeit, von der Aufheiz- und Imprägnieranlage 41 Fördermaterial abzuziehen und der Richteinrichtung 22 zuzuführen.

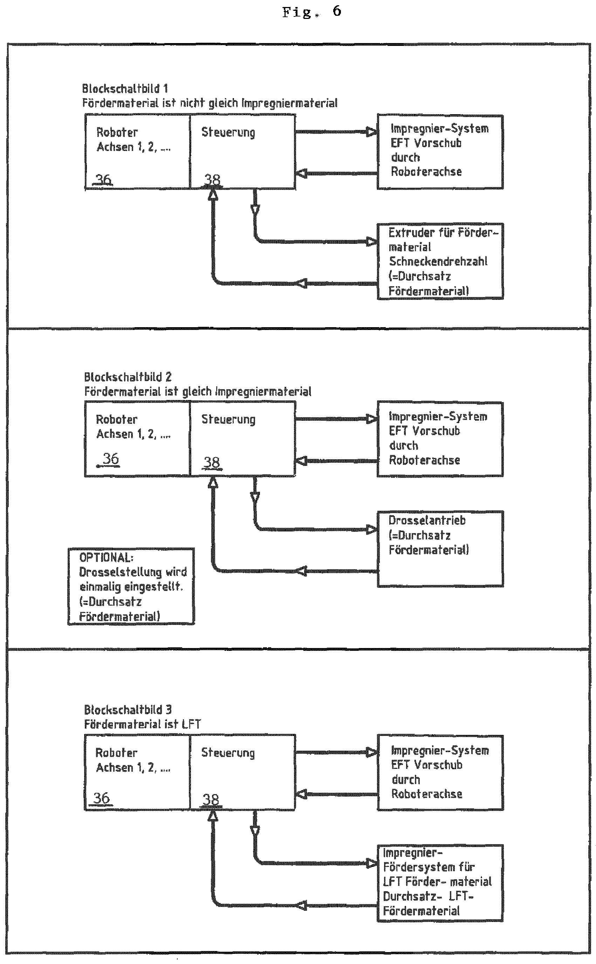

Die Verfahrensmaßnahmen, die aufgrund der erfindungsgemäßen Lehre durchführbar sind, sind der Fig. 6 zu entnehmen. In dem oberen Blockschaltbild 1 wird das Prinzip dargestellt, bei dem das Imprägniermaterial und das Fördermaterial voneinander abweichen. Über eine Achse eines mehrere Achsen aufweisenden Roboters 36 wird das Produkt 12 unter der Richteinrichtung 22 hindurchgefördert. Durch die Steuereinrichtung 38 des Roboters 36 wird der Geschwindigkeits- bzw. Beschleunigungsverlauf des Produkts 12 in Echtzeit auf die Umfangsgeschwindigkeit bzw. -beschleunigung der ersten Transporteinrichtung für die imprägnierte Endlosfaser, also im Ausführungsbeispiel der Fig. 1 bis 3 auf den Rotor bzw. die Imprägnierwalze 18 und gemäß Fig. 5 auf die Transporteinrichtung 40 übertragen. Es werden folglich über eine Achse des Roboters 38 sowohl der Geschwindigkeits- als auch der Beschleunigungsverlauf des Produkts 12 auf die Imprägnierwalze 18 bzw. die mehrere Rollen umfassende Transporteinrichtung 40 oder eine anders gestaltete Transporteinrichtung übertragen.

Über die Steuerung 36 wird auch der Extruder 30 für das Fördermaterial, also die Schneckendrehzahl des Extruders 30 geregelt, wodurch der Durchsatz des Fördermaterials durch die Richteinrichtung 22, also die Koextrusionsdüse vorgegeben wird. Hierdurch wird ermöglicht, dass die imprägnierte Endlosfaser 16 in gewissem Umfang gedehnt bzw. gestaucht werden kann, wobei die Endlosfaser 16 "gespannt" ist.

Damit die Endlosfaser 16 tatsächlich das gleiche Geschwindigkeits- und Beschleunigungsprofil wie das Produkt 12 aufweist, wird bei dem Ausführungsbeispiel der Fig. 1 bis 3 für die einzustellende Umfangsgeschwindigkeit bzw. -beschleunigung der Walze 18 mittler Durchmesser bzw. die mittlere Dicke der imprägnierten Endlosfaser 16 berücksichtigt. Dabei wird die imprägnierte Endlosfaser schlupffrei auf der Oberfläche der Imprägnierwalze 18 bzw. einer in diese eingelassene Nut geführt und somit transportiert.

Das Blockschaltbild 2 soll verdeutlichen, dass entsprechend der erfindungsgemäßen Lehre als Fördermaterial auch dasjenige benutzt werden kann, dass dem Extruder 24 entsprechend der Fig. 2 bzw. der Aufheiz- und Imprägnieranlage 41 gemäß Fig. 5 entnommen werden könnte. Zur Einstellung des Durchsatzes des Fördermaterials durch die Richteinrichtung 22 wird die Drossel 32 entsprechend geregelt, d.h. der Durchsatz durch die Leitung 31.

Es besteht jedoch auch die Möglichkeit, die Drossel einmalig einzustellen, so dass eine Regelung nicht erfolgt.

Das Blockschaltbild 3 soll prinzipiell verdeutlichen, dass als Fördermaterial, mittels dessen in der Richteinrichtung 22 die imprägnierte Endlosfaser "gespannt" wird, auch compoundierte Langfasern mit thermoplastischem Material benutzt werden können.

Erfolgt ein schlupffreier Transport nicht, so wird die Umfangsgeschwindigkeit bzw. -beschleunigung der Walze 18 bzw. der Rollen der Transporteinrichtung 40 in Abhängigkeit vom Faservorschub geregelt derart, dass der Faservorschub dem Geschwindigkeits- und Beschleunigungsverhalten des Objekts in Echtzeit entspricht. Hierzu ist der Walze 16 bzw. der Transporteinrichtung 40 der Messwertaufnehmer 19 vorgeordnet, der z. B. durch zwei Rollen oder Walzen gebildet wird, zwischen denen die Endlosfaser 16 hindurchgeführt wird. Durch den so gebildeten Geber wird sodann der Antrieb der Walze 16 bzw. der Transporteinrichtung 40, d.h. deren Geschwindigkeit bzw. Beschleunigung derart geregelt, dass erfindungsgemäß die Endlosfaser 16 das gleiche Geschwindigkeits- und Beschleunigungsverhalten wie das Objekt 12 aufweist.

## Patentansprüche

1. Verfahren zum Aufbringen einer mit einer aus einem thermoplastischen Material bestehenden oder ein thermoplastisches Material enthaltenden Imprägnierung versehenen Endlosfaser (16) auf ein sich bewegendes Objekt (12), insbesondere auf ein strukturbelastetes Bauteil, wobei die Endlosfaser (16) nach deren Imprägnierung einer Richteinrichtung (22) zugeführt wird, mit der die imprägnierte Endlosfaser (16) unidirektional auf das Objekt (12) ausgerichtet wird, wobei die imprägnierte Endlosfaser (16) durch einen ersten Kanal (26) der Richteinrichtung (22) geführt wird, in dessen Austrittsbereich auf die Endlosfaser (16) eine in Längsrichtung des ersten Kanals (26) wirkende Kraft einwirkt, und wobei das Objekt (12) mit einer Handhabungseinrichtung bewegt wird und sowohl Geschwindigkeits- als auch Beschleunigungsverlauf des sich bewegenden Objekts (12) auf die aufzubringende Endlosfaser (16) übertragen wird, wobei der Geschwindigkeits- und Beschleunigungsverlauf der Endlosfaser (16) mittels einer Messeinrichtung (19) ermittelt und in Abhängigkeit von ermittelten Messwerten die Geschwindigkeit und die Beschleunigung der Transporteinrichtung derart geregelt wird, dass der Transport der Endlosfaser (16) dem Geschwindigkeits- und Beschleunigungsverhalten des Objekts (12) in Echtzeit entspricht und im Austrittsbereich des ersten Kanals (26) ein Fördermaterial auf die Endlosfaser (16) einwirkt, über das die Endlosfaser (16) ausgerichtet wird, wobei die imprägnierte Endlosfaser (16) einer Düse als die Richteinrichtung (22) mit dem ersten Kanal (26) zugeführt wird, der von einem zweiten Kanal (28) umgeben ist, über den das Fördermaterial zugeführt wird.

2. Verfahren nach Anspruch 1, **dadurch gekennzeichnet, dass** die Handhabungseinrichtung ein Roboter (36) ist.

3. Verfahren nach Anspruch 1 oder 2, **dadurch gekennzeichnet, dass** die Endlosfaser (16) einer Einrichtung zum Imprägnieren und sodann einer Transporteinrichtung zugeführt wird, mittels der die Endlosfaser (16) dem Geschwindigkeits- und Beschleunigungsverlauf der Handhabungseinrichtung entsprechend transportiert und von der ersten Transporteinrichtung der Richteinrichtung (22) zugeführt wird.

4. Verfahren nach Anspruch 1, **dadurch gekennzeichnet, dass** die Endlosfaser (16) über das Fördermaterial in Längsrichtung des ersten Kanals (26) ausgerichtet wird.

5. Verfahren nach zumindest Anspruch 4, **dadurch gekennzeichnet, dass** als Fördermaterial ein solches verwendet wird, dass ein thermoplastisches Material ist oder ein solches enthält, insbesondere als Fördermaterial compoundiertes Material verwendet wird, das zumindest Langfasern und thermoplastisches Material enthält.

6. Verfahren nach Anspruch 4 oder 5, **dadurch gekennzeichnet, dass** der erste Kanal (26) von dem zweiten Kanal (28) konzentrisch umgeben ist.

7. Verfahren nach einem der Ansprüche 4 bis 6, **dadurch gekennzeichnet, dass** die aus dem ersten Kanal (26) austretende imprägnierte Endlosfaser (16) mit dem Fördermaterial unmittelbar auf das Objekt (12) aufgebracht wird.

8. Verfahren nach zumindest einem der vorherigen Ansprüche, **dadurch gekennzeichnet, dass** die imprägnierte Endlosfaser (16) in Lastrichtung des Objekts (12) auf dieses aufgebracht bzw. abgelegt wird.

9. Verfahren nach zumindest einem der vorherigen Ansprüche, **dadurch gekennzeichnet, dass** als Objekt (12) ein aus Kunststoff bestehendes tragendes Bauteil wie Kraftfahrzeugbauteil, insbesondere Sitzrückenlehne oder Sitzrückenbank, verwendet wird.

10. Verfahren nach zumindest einem der vorherigen Ansprüche, **dadurch gekennzeichnet, dass** als die Endlosfaser (16) eine 2-Komponenten-Faser verwendet wird, deren eine erste Komponente Filamente aus der Gruppe Naturfaser, Synthetikfaser, Carbonfaser, Glasfaser, Aramidfaser und deren andere zweite Komponente aus thermoplastischem Material bestehende Filamente sind, die zum Imprägnieren der ersten Komponenten z. B. durch IR-Bestrahlung aufgeschmolzen werden.

11. Anordnung (10) zum Aufbringen einer mit zumindest thermoplastisches Material enthaltender Imprägnierung versehenen Endlosfaser (16) auf ein sich bewegendes Objekt (12) umfassend eine Imprägniereinrichtung (20), eine erste Transporteinrichtung für die Endlosfaser (16) sowie eine zweite Transporteinrichtung für das Objekt (12), wobei zwischen der ersten Transporteinrichtung und dem Objekt (12) eine Richteinrichtung (22) angeordnet ist, mit der die imprägnierte Endlosfaser (16) unidirektional dem Objekt (12) zuführbar ist, und dass die Richteinrichtung (22) eine Düse mit zumindest einem ersten und einem zweiten Kanal (26, 28) ist, wobei dem ersten Kanal (26) die imprägnierte Endlosfaser (16) zuführbar ist und die imprägnierte Endlosfaser (16) beim Austreten aus dem ersten Kanal (26) unidirektional mittels eines durch den den ersten Kanal (26) umgebenden zweiten Kanal (28) strömenden Fördermaterials ausrichtbar ist, und wobei die zweite Transporteinrichtung für das Objekt (12) eine Handhabungseinrichtung ist, deren Steuereinrichtung (38) Geschwindigkeits- und Beschleunigungsverhalten des Objekts (12) auf den Antrieb der ersten Transporteinrichtung in Echtzeit abbildet, **gekennzeichnet durch** eine Messeinrichtung (19) die ausgebildet ist, den Geschwindigkeits- und Beschleunigungsverlauf der Endlosfaser (16) zu ermitteln, so dass in Abhängigkeit von ermittelten Messwerten die Geschwindigkeit und die Beschleunigung der Transporteinrichtung mittels der Steuereinrichtung (38) derart geregelt wird, dass der Transport der Endlosfaser (16) dem Geschwindigkeits- und Beschleunigungsverhalten des Objekts (12) in Echtzeit entspricht.

12. Anordnung nach Anspruch 11, **dadurch gekennzeichnet, dass** die Handhabungseinrichtung ein Roboter (36) ist.

13. Anordnung nach Anspruch 11 oder 12, **dadurch gekennzeichnet, dass** die erste Transporteinrichtung mehrere die Endlosfaser (16) führende Rollen aufweist, von denen zumindest eine über die Steuereinrichtung (38) der Handhabungseinrichtung Steuer- bzw. regelbar ist.

14. Anordnung nach zumindest einem der Ansprüche 11 bis 13, **dadurch gekennzeichnet, dass** das Fördermaterial ein gegebenenfalls Langfasern enthaltendes thermoplastisches Material ist oder enthält, wobei das thermoplastische Material insbesondere Polypropylen ist.

## Claims

1. Method for applying a continuous fiber (16) provided with an impregnation consisting of a thermoplastic material or containing a thermoplastic material to a moving object (12), in particular to a structurally loaded component, wherein the continuous fiber (16), after impregnation thereof, is fed to a straightening device (22) with which the impregnated continuous fiber (16) is unidirectionally aligned with the object (12), wherein the impregnated continuous fiber (16) is guided through a first channel (26) of the straightening device (22), in the outlet region of which a force acting in the longitudinal direction of the first channel (26) acts on the continuous fiber (16), and wherein the object (12) is moved by a handling device and both velocity and acceleration characteristics of the moving object (12) are transmitted to the continuous fiber (16) to be applied, wherein the velocity and acceleration characteristics of the continuous fiber (16) is determined by means of a measuring device (19) and the velocity and the acceleration of the transport device are controlled as a function of determined measured values in such a way that the transport of the continuous fiber (16) corresponds to the velocity and acceleration behavior of the object (12) in real time and a conveying material acts on the continuous fiber (16) in the outlet region of the first channel (26), via which the continuous fiber (16) is aligned, wherein the impregnated continuous fiber (16) is fed to a nozzle as the straightening device (22) having the first channel (26) surrounded by a second channel (28) through which the feed material is fed.

2. Method according to claim 1, **characterized in that** the handling device is a robot (36).

3. Method according to claim 1 or 2, **characterized in that** the continuous fiber (16) is fed to a device for impregnation and then to a transport device, by means of which the continuous fiber (16) is transported in accordance with the velocity and acceleration characteristics of the handling device and is fed from the first transport device to the straightening device (22).

4. Method according to claim 1, **characterized in that** the continuous fiber (16) is aligned over the conveying material in the longitudinal direction of the first channel (26).

5. Method according to at least claim 4, **characterized in that** thermoplastic material is used as conveying material or the conveying material contains a thermoplastic material, in particular compounded material is used as conveying material that contains at least long fibers and thermoplastic material.

6. Method according to claim 4 or 5, **characterized in that** the first channel (26) is concentrically surrounded by the second channel (28).

7. The method according to one of claims 4 to 6, **characterized in that** the impregnated continuous fiber (16) emerging from the first channel (26) is applied directly to the object (12) with the conveying material.

8. Method according to at least one of the previous claims, **characterized in that** the impregnated continuous fiber (16) is applied or deposited on the object (12) in the load direction thereof.

9. Method according to at least one of the previous claims, **characterized in that** a load-bearing component consisting of plastic, such as a motor vehicle component, in particular a seat backrest or seat back bench, is used as the object (12).

10. Method according to at least one of the preceding claims, **characterized in that** a 2-component fiber is used as the continuous fiber (16), which first component are filaments from the group consisting of natural fiber, synthetic fiber, carbon fiber, glass fiber, aramid fiber, and the other second component are filaments consisting of thermoplastic material, which are melted, for example by IR-radiation, for impregnating the first components.

11. Arrangement (10) for applying to a moving object (12) a continuous fiber (16) provided with impregnation containing at least thermoplastic material comprising an impregnating device (20), a first transport device for the continuous fiber (16) and a second transport device for the object (12), wherein a straightening device (22) is arranged between the first transport device and the object (12), by means of which the impregnated continuous fiber (16) can be fed unidirectionally to the object (12), and that the directing device (22) is a nozzle with at least a first and a second channel (26, 28), wherein the impregnated continuous fiber (16) can be supplied to the first channel (26) and the impregnated continuous fiber (16) can be unidirectionally aligned upon exiting the first channel (26) by means of a conveying material flowing through the second channel (28) surrounding the first channel (26), and wherein the second transport device for the object (12) is a handling device whose control device (38) maps the velocity and acceleration behavior of the object (12) to the drive of the first transport device in real time, **characterized by** a measuring device (19) which is designed to determine the velocity and acceleration curve of the continuous fiber (16), so that, as a function of determined measured values, the velocity and acceleration of the transport device are regulated by means of the control device (38) in such a way that the transport of the continuous fiber (16) corresponds to the velocity and acceleration behavior of the object (12) in real time.

12. Arrangement according to claim 11, **characterized in that** the handling device is a robot (36).

13. Arrangement according to claim 11 or 12, **characterized in that** the first transport device comprises a plurality of rollers guiding the continuous fiber (16), at least one of which is controllable via the control device (38) of the handling device.

14. Arrangement according to at least one of claims 11 to 13, **characterized in that** the conveying material is or contains a thermoplastic material optionally containing long fibers, the thermoplastic material being in particular polypropylene.

## Revendications

1. Procédé pour appliquer une fibre continue (16) pourvue d'une imprégnation constituée par un matériau thermoplastique ou contenant un matériau thermoplastique sur un objet (12) en mouvement, en particulier sur un élément de construction à structure sollicitée, la fibre continue (16) étant amenée, après son imprégnation, à un dispositif de redressement (22), avec lequel la fibre continue (16) imprégnée est orientée de manière unidirectionnelle sur l'objet (12), dans lequel la fibre continue (16) imprégnée est guidée à travers un premier canal (26) du dispositif de redressement (22), dans la zone de sortie duquel une force agissant dans la direction longitudinale du premier canal (26) agit sur la fibre continue (16), et dans lequel l'objet (12) est déplacé par un dispositif de manipulation, et tant la courbe de vitesse que la courbe d'accélération de l'objet (12) en mouvement sont transmises à la fibre continue (16) à appliquer, dans lequel la courbe de vitesse et d'accélération de la fibre continue (16) est déterminée au moyen d'un dispositif de mesure (19) et la vitesse et l'accélération du dispositif de transport est réglée en fonction des valeurs de mesure déterminées de telle sorte que le transport de la fibre continue (16) correspond au comportement de vitesse et d'accélération de l'objet (12) en temps réel, et dans la zone de sortie du premier canal (26), un matériau de convoyage agit sur la fibre continue (16), par l'intermédiaire duquel la fibre continue (16) est orientée, la fibre continue imprégnée (16) étant amenée à une buse en tant que dispositif de redressement (22) avec le premier canal (26), qui est entouré par un deuxième canal (28), par l'intermédiaire duquel le matériau de convoyage est amené.

2. Procédé selon la revendication 1, **caractérisé en ce que** le dispositif de manipulation est un robot (36) .

3. Procédé selon la revendication 1 ou 2, **caractérisé en ce que** la fibre continue (16) est amenée à un dispositif d'imprégnation, puis à un dispositif de transport au moyen duquel la fibre continue (16) est transportée conformément à la courbe de vitesse et d'accélération du dispositif de manipulation et est amenée par le premier dispositif de transport au dispositif de redressement (22).

4. Procédé selon la revendication 1, **caractérisé en ce que** la fibre continue (16) est orientée dans la direction longitudinale du premier canal (26) par l'intermédiaire du matériau de convoyage.

5. Procédé selon au moins la revendication 4, **caractérisé en ce qu'**on utilise comme matériau de convoyage un matériau qui est un matériau thermoplastique ou qui contient un tel matériau, en particulier on utilise comme matériau de convoyage un matériau composite qui contient au moins des fibres longues et un matériau thermoplastique .

6. Procédé selon la revendication 4 ou 5, **caractérisé en ce que** le premier canal (26) est entouré de manière concentrique par le second canal (28).

7. Procédé selon l'une des revendications 4 à 6, **caractérisé en ce que** la fibre continue (16) imprégnée sortant du premier canal (26) est appliquée directement sur l'objet (12) avec le matériau de convoyage.

8. Procédé selon au moins l'une des revendications précédentes, **caractérisé en ce que** la fibre continue (16) imprégnée est appliquée ou déposée sur l'objet (12 ) dans la direction de charge de celui-ci.

9. Procédé selon au moins l'une des revendications précédentes, **caractérisé en ce qu'**on utilise comme objet (12) un composant porteur en matière plastique tel qu'un composant de véhicule automobile, en particulier un dossier de siège ou une banquette dorsale de siège.

10. Procédé selon au moins l'une des revendications précédentes, **caractérisé en ce qu'**on utilise comme fibre continue (16) une fibre à deux composants, dont un premier composant est constitué par des filaments choisis parmi le groupe des fibres naturelles, des fibres synthétiques, des fibres de carbone, des fibres de verre et des fibres d'aramide, et dont l'autre second composant est constitué par des filaments en matière thermoplastique, qui sont fondus pour imprégner les premiers composants, par exemple par irradiation IR.

11. Agencement (10) pour appliquer une fibre continue (16) pourvue d'une imprégnation contenant au moins un matériau thermoplastique sur un objet (12) en mouvement, comprenant un dispositif d'imprégnation (20), un premier dispositif de transport pour la fibre continue (16) ainsi qu'un deuxième dispositif de transport pour l'objet (12), et dans lequel un dispositif de redressement (22) est agencé entre le premier dispositif de transport et l'objet (12), avec lequel la fibre continue (16) imprégnée peut être amenée de manière unidirectionnelle à l'objet (12), dans lequel le dispositif de redressement (22) est une buse avec au moins un premier et un deuxième canal (26, 28), la fibre continue (16) imprégnée pouvant être amenée au premier canal (26), et la fibre continue (16) imprégnée, à la sortie du premier canal (26), pouvant être orientée de manière unidirectionnelle au moyen d'un matériau de convoyage s'écoulant à travers le deuxième canal (28) qui entoure le premier canal (26), et le deuxième dispositif de transport pour l'objet (12) étant un dispositif de manipulation dont le dispositif de commande (38) reproduit en temps réel le comportement de vitesse et d'accélération de l'objet (12) sur l'entraînement du premier dispositif de transport, **caractérisé par** un dispositif de mesure (19) qui est réalisé pour déterminer la courbe de vitesse et d'accélération de la fibre continue (16), de telle sorte qu'en fonction des valeurs de mesure déterminées, la vitesse et l'accélération du dispositif de transport sont réglées au moyen du dispositif de commande (38) de telle sorte que le transport de la fibre continue (16) correspond en temps réel au comportement de vitesse et d'accélération de l'objet (12).

12. Agencement selon la revendication 11, **caractérisé en ce que** le dispositif de manipulation est un robot (36).

13. Agencement selon la revendication 11 ou 12, **caractérisé en ce que** le premier dispositif de transport présente plusieurs rouleaux guidant la fibre continue (16), dont au moins un peut être commandé ou réglé par le dispositif de commande (38) du dispositif de manipulation.

14. Agencement selon au moins l'une des revendications 11 à 13, **caractérisé en ce que** le matériau de convoyage est ou contient un matériau thermoplastique contenant éventuellement des fibres longues, le matériau thermoplastique étant en particulier du polypropylène.
